Europäisches Patentamt

European Patent Office

Office européen des brevets

(11) Veröffentlichungsnummer: **0 275 513**
**A1**

# (12) EUROPÄISCHE PATENTANMELDUNG

(21) Anmeldenummer: 87118828.0

(51) Int. Cl.⁴ **C10B 5/02** , C10B 5/10

(22) Anmeldetag: **18.12.87**

(30) Priorität: 22.12.86 DE 3643916
22.12.86 DE 3643917
22.12.86 DE 3643918
22.12.86 DE 3643919

(43) Veröffentlichungstag der Anmeldung:
27.07.88 Patentblatt 88/30

(84) Benannte Vertragsstaaten:
ES

(71) Anmelder: Bergwerksverband GmbH
Franz-Fischer-Weg 61
D-4300 Essen 13(DE)

(72) Erfinder: Nashan, Gerd, Dr.
Hirschkampstrasse 24
D-4200 Oberhausen 11(DE)
Erfinder: Wessiepe, Klaus, Dr.-Ing.
Schliepersberg 33a
D-4300 Essen 15(DE)
Erfinder: Bertling, Heribert, Dr.
Wolfskuhle 40
D-4320 Hattingen 16(DE)
Erfinder: Rohde, Wolfgang, Dr.-Ing.
Lindkenshoferweg 72
D-4300 Essen 14(DE)
Erfinder: Blase, Manfred, Dipl.-Ing.
Propsteistrasse 62
D-4300 Essen 16(DE)
Erfinder: Galow, Manfred
Vosselerweg 2
D-4300 Essen 12(DE)
Erfinder: Kochanski, Ulrich, Dipl.-Ing.
Hustadtring 59
D-4630 Bochum(DE)
Erfinder: Dürselen, Heinz, Dipl.-Ing.
Laubrockweg 5
D-4300 Essen 14(DE)
Erfinder: Janicka, Johannes, Dr.
Mergelstrasse 5
D-4200 Oberhausen 12(DE)
Erfinder: Stalherm, Dieter, Dr.
Doriderweg 18
D-4352 Herten 3(DE)
Erfinder: Hoitz, Joachim, Dr.
Brixener Strasse 18
D-4352 Herten 3(DE)
Erfinder: Tietze, Jürgen, Dr.
Saladin-Schmitt-Strasse 30
D-4630 Bochum 1(DE)

EP 0 275 513 A1

Erfinder: **Schumacher, Ralf**
**Am Lilienbaum 29**
**D-5800 Hagen(DE)**

(54) **Verkokungssystem und Reaktorblock.**

(57) Verkokungssystem, bei dem Einsatzmischungen, insbesondere auf Basis von Steinkohle, chargenweise einem Reaktor (1) aufgegeben werden, der indirekt mit Wärmerückgewinnung in Regeneratoren (I, II) oder Rekuperatoren beheizt wird, wobei der Reaktor als Großraumverkokungsreaktor (100) ausgebildet ist, mehrere Großraumverkokungsreaktoren zu einem Reaktorblock zusammengefaßt sind und die Großraumverkokungsreaktoren zu voneinander unabhängigen Modulen ausgebildet sind, wobei jeder Modul unabhängig von seinen Nachbarmodulen völlig ohne oder ohne wesentliche Beeinträchtigung der Betriebsmöglichkeiten der Nachbarmodule betreibbar und gegebenenfalls auswechselbar ist. Die einzelnen Reaktoren sind statisch und beheizungstechnisch unabhängig voneinander betreibbar. Die Regeneratoren bzw. Rekuperatoren (I, II, R, R') können seitlich oder unterhalb der Reaktorkammer angeordnet sein. Benachbarte Reaktoren können eine gemeinsame Zwischenwand (2) aufweisen.

FIG. 6

## Verkokungssystem und Reaktorblock

Die Erfindung betrifft ein Verkokungssystem, bei dem Einsatzmischungen, vorzugsweise auf Basis von Steinkohle, chargenweise einem Reaktor aufgegeben werden, der indirekt mit Wärmerückgewinnung in regeneratoren oder Rekuperatoren beheizt wird.

Die Erfindung betrifft weiterhin Reaktorblöcke zur Durchführung des Verkokungssystems.

Die Kammern zur Verkokung von Steinkohle werden üblicherweise in einer Batteriebauweise erstellt, bei der Kammern und Heizwände im Wechsel nebeneinander angeordnet sind. Hierbei liegt also jeweils eine Heizwand zwischen zwei Kammern.

Für den Betrieb einer Koksofenbatterie wird ein bestimmter Druck-und Füllrhythmus eingehalten, beispielsweise der 5/2-Turnus, der besagt, daß die Koksöfen mit den Nummern 1, 6, 11, 16 usw. ... 3, 8, 13, 18 usw. ... 5, 10, 15, 20 usw. ... 2, 7, 12, 17 usw. ... 4, 9, 14, 19 usw. leer ausgedrückt und gefüllt werden; vielfach ist auch der 2/1-Turnus gebräuchlich, bei dem analog die Koksöfen Nr. 1, 3, 5, 7 usw. ... 2, 4, 6, 8 usw. nacheinander bedient werden. Gewollte Konsequenz dieser Druckrhythmen ist der ungleiche Abgarungszustand benachbarter Koksofenchargen: Auf diese Weise wird verhindert, daß die Treibdruckspitze einer Ofencharge gerade dann auftritt, wenn die benachbarte Kammer entleert oder der Besatz schon weitgehend abgegart und geschrumpft ist und kein Widerlager gegen den Treibdruck mehr bieten kann. Eine weitere Konsequenz ist aber auch, daß die Wärmezufuhr dem jeweiligen Bedarf des Kammerbesatzes nicht angepaßt werden kann; dies ist sehr nachteilig, da der Wärmebedarf einer Charge zum Ende der Abgarung sehr gering wird, so daß die Wärmezufuhr reduziert werden könnte. Bei der bekannten Bau-und Betriebsweise von Koksofenbatterien muß daher zwangsläufig ein höherer Wärmebedarf in Kauf genommen werden.

Auf der anderen Seite zwingt aber die geringe Stabilität der Heizwände dazu, einen bestimmten ausgeklügelten Druckrhythmus sorgfältig einzuhalten, um betriebliche Risiken durch treibende Koksofenchargen in Grenzen zu halten. Dennoch kommt es in den Kokereien immer wieder vor, daß Koksofenwände durch Einsatz treibgefährlicher Kohle deformiert bzw. zerstört werden. Daher wird in den Kokereibetrieben sorgsam darauf geachtet, daß der Anteil treibender Kohlen in einer Mehrkomponenten-Einsatzmischung nicht zu hoch wird.

Ein weiterer Nachteil der konventionellen Bauweise von Koksofenbatterien besteht darin, daß viele thermisch hoch beanspruchte Dichtelemente vorhanden sind, die sich häufig verziehen und dadurch ihre Dichtungsfunktion einbüßen; Emissionen an diesen Dichtsystemen sind dann die Folge.

Ein weiterer Nachteil dieser Bauweise ist darin zu sehen, daß nur die gesamte Batterie ersetzt werden kann. Eine Erneuerung von Batterieteilen, bei der gleichzeitig fortschrittliche Techniken angewendet werden können, ist hierbei im allgemeinen mit einem vertretbaren Aufwand nicht realisierbar.

Der Erfindung liegt die Aufgabe zugrunde, ein Verkokungssystem der gattungsgemäßen Art vorzuschlagen, das gegenüber dem bekannten System eine Vermeidung der Wandschäden durch zu hohe Treib drücke, eine Senkung des Energieverbrauchs und der Emissionen, eine Unabhängigkeit der Einsatzmischungen von der Rohstoffbasis sowie eine verbesserte Steuerung und Regelung ermöglicht. Der Erfindung liegt weiterhin die Aufgabe zugrunde, geeignete Reaktoren vorzuschlagen, die statisch und beheizungstechnisch unabhängig betreibbar sind und die zu Blöcken zusammengefaßt sind, die mit fortschrittlichen Bautechniken errichtet und in einfacher Weise teilerneuert werden können.

Diese Aufgabe wird hinsichtlich des Verkokungssystems der eingangs genannten Gattung dadurch gelöst, daß

a) der Reaktor als Großraumverkokungsreaktor ausgebildet ist;

b) mehrere Großraumverkokungsreaktoren zu einem Reaktorblock zusammengefaßt sind;

c) die Großraumverkokungsreaktoren zu voneinander unabhängigen Modulen ausgebildet sind, wobei jeder Modul unabhängig von seinen Nachbarmodulen völlig ohne oder ohne wesentliche Beeinträchtigung der Betriebsmöglichkeiten der Nachbarmodule betreibbar und gegebenenfalls auswechselbar ist.

Bei dem erfindungsgemäßen Verkokungssystem werden somit zu leicht austauschbaren Modulen ausgebildete Großraumverkokungsreaktoren verwendet, wodurch ein erhebliches Rationalisierungspotential erschlossen wird. Damit sind Reparaturen an Teilen eines Reaktorblockes vereinfacht, was einen kontinuierlichen Betrieb und damit beträchtliche Produktivitätssteigerungen (t Koks je Druckvorgang) und Leistungssteigerungen (t Koks/m². h) ermöglicht, ohne daß sich der Investitionsbedarf insgesamt erhöht.

Für dieses Verkokungssystem wird zweckmäßig ein Reaktorblock verwendet, dessen Module als Teilmodule einzeln zwischen zwei starren, die konstruktions-und betriebsbedingten Kräfte aufnehmenden Seitenwänden angeordnet sind.

Da folglich die konstruktions-und betriebsbedingten Kräfte von starren Seitenwänden aufgenommen werden, können nämlich als Module außerordentlich große Reaktordimensionen verwirklicht werden.

Durch die Vergrößerung der Reaktorkammer ist der Aufwand für Regelung und Steuerung sehr niedrig. Da weniger Dichtflächen, bezogen auf die Produktionsmenge, vorhanden sind, werden die Emissionen beträchlich reduziert. Außerdem verringert sich die Anzahl der Druckvorgänge.

Mit dem erfindungsgemäßen Verkokungssystem können alle Kohlenarten, auch vorerhitzte, problemlos verkokt werden. Treibschäden werden gänzlich vermieden, weil die starren Seitenwände ein Auslenken der Heizwände verhindern. Das bisherige, nachteilige nachgiebige System wird durch ein vorteilhafteres starres System abgelöst, das wesentlich höheren Verkokungsdrücken widersteht. Dadurch wird die Kokserzeugung aus einer sehr breiten Kokskohlenpalette möglich, insbesondere aus den etwas höher inkohlten treibgefährlichen Fettkohlen bzw. oberen Eßkohlen. Bei diesem starren System dient die Reaktordecke nur zur Isolation und kann daher sehr leicht ausgeführt werden. Sie muß nicht, wie bei dem bisherigen nachgiebigen System, eine Haltekraft in senkrechter Richtung auf die Heizwände ausüben.

Dieses Verkokungssystem ermöglicht Teilmodul-Ausführungen, bei denen jeder Teilmodul jeweils unabhängig von seinen Nachbarteilmodulen völlig ohne oder ohne wesentliche Beeinträchtigung der Betriebsmöglichkeiten der Nachbarteilmodule betreib bar und gegebenenfalls auswechselbar ist.

Vorteilhaft sind die einem Teilmodul benachbarten Seitenwände unabhängig von der Reaktordecke in vorgegebenem Abstand verbindbar, indem die Seitenwände an vorzugsweise auf der Reaktordecke in Blocklängsrichtung angeordneten Abstandselementen und/oder Längsankern festlegbar sind.

Die aneinander grenzenden Heizwände benachbarter Module/Teilmodule können beheizungstechnisch unabhängig voneinander ausgebildet sein.

Der Wärmerückgewinnungsteil eines Moduls/Teilmoduls kann unabhängig von den übrigen Teilen des Moduls/Teilmoduls ohne Beeinträchtigung der Betriebsmöglichkeiten der übrigen Module/Teilmodule austauschbar ausgestaltet sein.

Der Wärmerückgewinnungsteil eines Moduls kann entweder beiderseits außen neben den Heizwänden oder in Form von Regeneratoren oder Rekuperatoren unter den Heizwänden und/oder den Reaktorkammern bzw. in kombinierter Ausführung angeordnet sein. Zweckmäßig ist jede der beiden Heizwände einer Reaktorkammer eines Moduls/Teilmoduls mit eigenen, getrennt beaufschlagbaren Regeneratoren für Luft, Schwachgas und Abhitze versehen.

Die Module, Teilmodule und/oder einzelne Teile der Module, Teilmodule und/oder die Seitenwände und/oder Teile der Seitenwände können aus vorgefertigten, möglichst großvolumigen Teilen, gegebenenfalls aus Feuerfestbeton, bestehen.

Eine planparallele Ausgestaltung der Heizwände führt zu einer erheblichen Vereinfachung der Bausteinformate sowie zu einer Verringerung des Aufwandes beim Aufmauern. Zugleich kann im Gegensatz zu den bisher üblichen Konstruktionen über der gesamten Länge der Reaktorkammer eine gleichmäßige Wärmemenge zugeführt werden, und die bekannten Probleme bei der Verteilung der in Kammerlängsrichtung zuzuführenden Gasmengen für die Unterfeuerung treten nicht mehr auf.

Überraschenderweise hat sich gezeigt, daß sich bei breiteren Kammern die Kammerfüllung aufgrund der Schrumpfung hinreichend weit von den Kammerwänden absetzt, so daß es keine Schwierigkeiten beim Ausdrücken des Kokses gibt. Außerdem können von den Heizwänden nunmehr auch Reibungskräfte aufgenommen werden.

Die planparallele Ausführung hat weiterhin den Vorteil, daß über die gesamte Kammerlänge die Beheizung auf eine einheitliche, maximale Steintemperatur eingestellt werden kann, um kurze Verkokungszeiten zu erreichen.

Bei dem erfindungsgemäßen Verkokungssystem wird der Reaktorkammer gezielt die dem jeweiligen Garungszustand der Kammerfüllung angepaßte Wärmemenge zugeführt und somit der Energieverbrauch reduziert. Gleichzeitig wird die Kammerfüllung an allen Stellen gleichmäßig und vollständig verkokt, ohne daß es zu unerwünschten Überhitzungen kommt. Durch die Vermeidung von zu hohen Temperaturen wird hierbei auch die Bildung von $NO_x$ im Verbrennungsabgas in den vorgeschriebenen Grenzen gehalten.

Die Verbrennungsmedien werden für jeden einzelnen Heizzug in getrennten Regeneratoreinheiten oder Rekuperatoreinheiten vorgewärmt bzw. abgekühlt und die Mengenströme jeweils individuell gesteuert. Durch diese Maßnahme ist es möglich, die Wärmezufuhr über die Länge der Reaktorkammer dem örtlichen Bedarf der Kammerfüllung anzupassen.

Zweckmäßig weist der erfindungsgemäße Großraumverkokungsreaktor eine Nutzhöhe von mindestens 8,5 m und eine Nutzlänge von mindestens 18 m sowie eine Breite der Reaktorkammer von mindestens 0,7 m auf. Dies entspricht einem Reaktornutzvolumen von 107 m³ und einer Kokserzeugung von 71 t. Machbarkeitsstudien hatten zum Ergebnis, daß eine Reaktornutzhöhe von 12 m, eine Reaktornutzlänge von 25 m sowie eine Kammerbreite von 0,85 m noch möglich sind, was einem Reaktornutzvolumen von 255 m³ und somit einer Kokserzeugung von 165 t entspricht. Die bisher bekanntgewordenen herkömmlichen Kammern haben maximal ein Nutzvolumen von 70 m³, entsprechend einer Kokserzeugung von 45 t.

Bei solchen Großraumverkokungsreaktoren kann die Dicke der Läuferwand auf bis zu 50 mm verringert werden, da die statischen Funktionen auf die starren Seitenwände übertragen bzw. von diesen übernommen werden, während die Heizwände der Reaktorkammern lediglich wärmetechnische Funktionen übernehmen, so daß sie alleine nach wärmetechnischen Gesichtspunkten ausgelegt werden und entsprechend leicht gebaut sein können. Damit wird die Wärmeübertragung auf die in der von den Heizwänden begrenzten Reaktorkammer befindliche Kohle verbessert. Es wird also nicht nur der konstruktive Aufbau des Reaktors mit großen Kammervolumen vereinfacht, sondern auch noch die Betriebsweise wesentlich verbessert. Durch die Verringerung der Läuferwanddicke ist außerdem eine weitere Verminderung der NO$_x$-Bildung aufgrund der Erniedrigung der Heizzugtemperatur möglich, ohne daß eine Verlängerung der Garungsdauer erforderlich ist.

Die die konstruktions-und betriebsbedingten Kräfte des Großraumverkokungsreaktors aufnehmenden starren Seitenwände sind vorzugsweise formschlüssig mit einer Grundplatte verbunden. Dadurch wird sichergestellt, daß die Fußpunkte der starren Seitenwände festliegen.

Zur Übertragung der Kräfte von der Reaktorkammer auf die starren Seitenwände des Großraumverkokungsreaktors schließen sich an die Binderwände zweckmäßig Querwände an, zwischen denen die Regeneratoren oder Rekuperatoren in Kammerlängsrichtung angeordnet sind.

Zwischen starrer Seitenwand und Heizwand des Großraumverkokungsreaktors können zwei Regeneratoren mit in entgegengesetzter Richtung strömenden Medien angeordnet sein, die durch eine in Kammerlängsrichtung verlaufende Längswand voneinander getrennt sind und über eine obere oder untere Umkehrstelle miteinander in Verbindung stehen.

Statt des einen Regenerators in der Nähe der starren Seitenwand des Großraumverkokungsreaktors kann ein senkrechter Kanal ohne Wärmeaustauschmaterial angeordnet sein, um die thermische Belastung der starren Seitenwand weiter zu verringern.

Dabei kann, um die Reaktorbreite zu verringern, die Isolierschicht zwischen dem Regenerator und der Heizwand des Großraumverkokungsreaktors in kalten Bereich (oben) des Regenerators dicker bzw. weniger wärmeleitend sein als in warmen Bereich (unten) und die Isolierschicht zwischen dem Kanal und dem Regenerator im warmen Bereich (unten) dicker bzw. weniger wärmeleitend sein als im kalten Bereich (oben) des Regenerators.

Die Heizzüge der Heizwände können nach Art des Zwillingszug-, Vierzug-oder halbgeteilten Beheizungssystems ausgebildet werden, wobei jeder der beiden Heizwände einer Reaktorkammer eigene, getreent beaufschlagbare Regeneratoren für Luft, Schwachgas und Abhitze zugeordnet sind. Dies ermöglicht eine vollkommen unabhängige Beheizung des Kammerbesatzes von beiden Kammerwänden her.

Der Betrieb eines Reaktorblockes kann hinsichtlich seiner Betriebsweise flexibel gestaltet und an geänderte Marktgegebenheiten angeglichen werden, da jeder Modul/Teilmodul in wärmetechnischer und bautechnischer Hinsicht eine von den anderen Modulen/Teilmodulen unabhängige Einheit ist. Durch die Zusammenfassung zu Reaktorblöcken bleiben jedoch die Vorteile der früheren Batteriebauweise hinsichtlich der Bedienung erhalten.

Damit wird ein völlig neues Konzept vorgeschlagen, welches den Bau von Großraumverkokungsreaktoren mit über die bisher üblichen Kammerhöhen, Kammerlängen und Kammerbreiten hinausgehenden Nutzmaßen zuläßt. Da die Heizwände beheizungstechnisch unabhängig voneinander ausgebildet sind, lassen sich die einzelnen Großraumverkokungsreaktoren der Reaktorblöcke beispielsweise durch eine Programmsteuerung völlig unabhängig voneinander betreiben, was bei der bisherigen Batteriebauweise wegen der konstruktiven-und beheizungstechnischen Kopplung benachbarter Kammern nicht möglich war.

Ein weiteres vorteilhaftes Merkmal der Blockbauweise besteht darin, daß jeweils nur eine starre Seitenwand zwischen zwei benachbarten Großraumverkokungsreaktoren angeordnet ist.

Im Gegensatz zu den zwischen den starren Seitenwänden vorgeschlagenen Einzelverankerungen können auch Längsanker, die vorzugsweise auf der Reaktordecke über die gesamte Länge des Reaktorblockes reichen, verwendet werden. In Verbindung mit den einzelnen Abstandselementen ergibt sich dadurch eine Vereinfachung in der Längsverankerung des Reaktorblockes.

Mit der Erfindung wird daher insgesamt ein Reaktorblock vorgeschlagen, welcher große Kammervolumina bei einfachem Aufbau und einfacher Reparaturmöglichkeit sowie eine wirtschaftliche, programmierbare und selbständige Betriebsweise der einzelnen Großraumverkokungsreaktoren in sich vereinigt.

In der Reaktordecke können eine oder mehrere längliche Öffnungen angeordnet sein. Durch die länglichen Öffnungen kann sowohl das Chargieren als auch das Einebnen des Besatzes vorgenommen werden. Vorteilhaft können sekundäre Eintragsysteme, z. B. in die Reaktorkammer absenkbare Teleskoprohre, eingesetzt werden.

Die Erfindung wird nachfolgend anhand der Zeichnung näher beschrieben:

Die Zeichnung zeigt in der

Fig. 1 einen Vertikalschnitt durch einen zu einem Modul ausgebildeten Großraumverkokungsreaktor, bei dem die Regeneratoren zwischen den Heizwänden und den starren Seitenwänden angeordnet sind, und in

Fig. 2 einen waagerechten Teilschnitt nach der Linie X-X von Fig. 1.

Fig. 3 zeigt einen entsprechenden Vertikalschnitt einer anderen Ausführungsform des Gegenstandes der Fig. 1 mit einem in der Nähe der starren Seitenwand angeordneten senkrechten Kanal.

Fig. 4 zeigt eine Weiterbildung des Gegenstandes der Fig. 3, bei der die Isolierschichten unterschiedlich dick ausgebildet sind.

Fig. 5 zeigt einen Großraumverkokungsreaktor im Vertikalschnitt, bei dem die Regeneratoren unterhalb der Heizwände und der Reaktorkammer angeordnet sind.

Fig. 6 stellt im Vertikalschnitt einen aus Großraumverkokungsreaktoren mit zwischen den Heizwänden und den starren Seitenwänden angeordneten Regeneratoren bestehenden Reaktorblock dar.

Fig. 7 stellt einen aus Großraumverkokungsreaktoren bestehenden Reaktorblock ähnlich Fig. 6 dar, bei dem nur jeweils eine starre Seitenwand zwischen zwei benachbarten Großraumverkokungsreaktoren angeordnet ist.

Fig. 8 stellt einen Reaktorblock ähnlich Fig. 6 dar, bei dem die Regeneratoren unterhalb der Heizwände angeordnet sind.

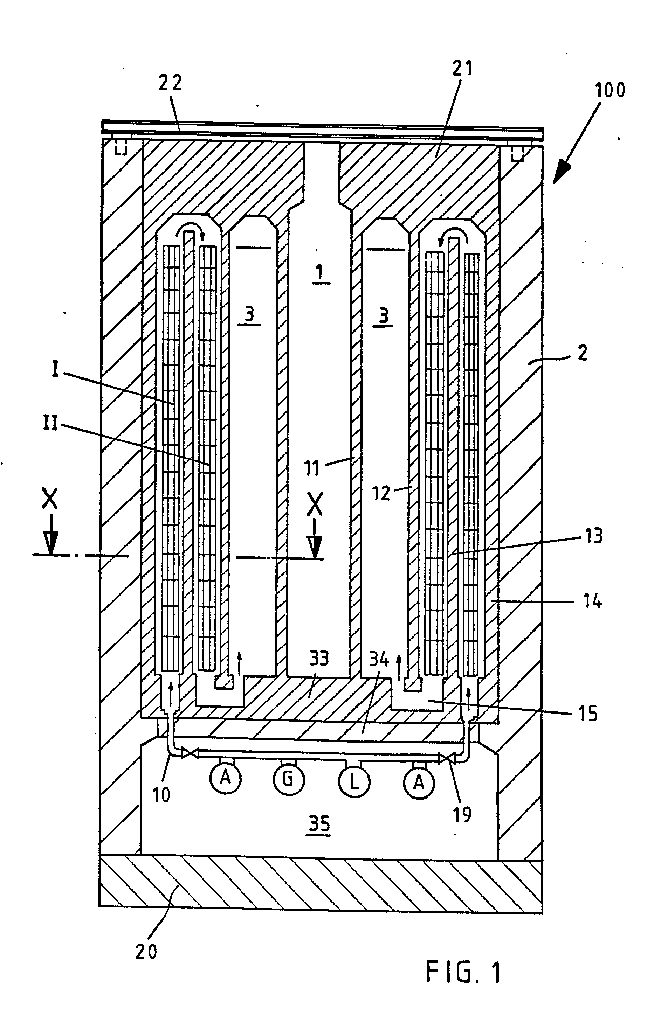

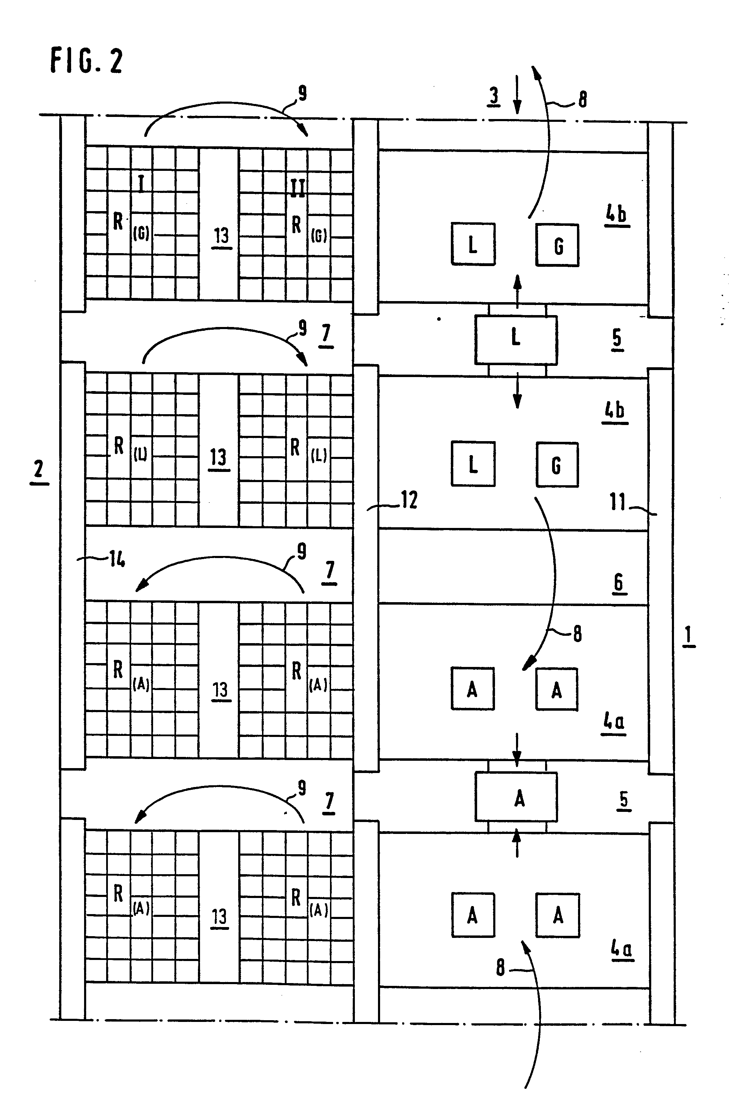

In Figure 1 ist ein zu einem Modul ausgebildeter Großraumverkokungsreaktor 100 in einem Vertikalschnitt dargestellt. Er besteht aus einer Reaktorkammer 1, Heizwänden 3 mit einer Läuferwand 11 und einer Trennwand 12, Regeneratoren I und II, getrennt durch eine Längswand 13, Wänden mit Isolierschicht 14, einer Reaktordecke 21 und einem Reaktorboden 33. Diese Elemente sind zwischen zwei starren Seitenwänden 2 angeordnet, die unten über eine Grundplatte 20 und oben über Abstandselemente 22 miteinander verbunden sind. Die Reaktorkammer 1 ist in üblicher Weise an ihrer Vorderseite und an ihrer Rückseite mit abnehmbaren Reaktortüren (hier nicht dargestellt) versehen. Unterhalb des Reaktorbodens 33 ist ein Abstandselement 34 angebracht, das einen Reaktorkeller 35 nach oben hin begrenzt. Im Reaktorkeller 35 sind Zu-und Abfuhrkanäle 10 für die Verbrennungsmedien Luft L, Gas G und Abhitze A untergebracht. Sie sind an abziehende Heizzüge 4a und aufbrennende Heizzüge 4b angeschlossen (Fig. 2). Jeder einzelne Heizzug 4a, 4b, kann über Ventile 19 gesteuert bzw. geregelt werden. Es können aber auch mehrere Heizzüge 4a, 4b, gemeinsam gesteuert bzw. geregelt werden.

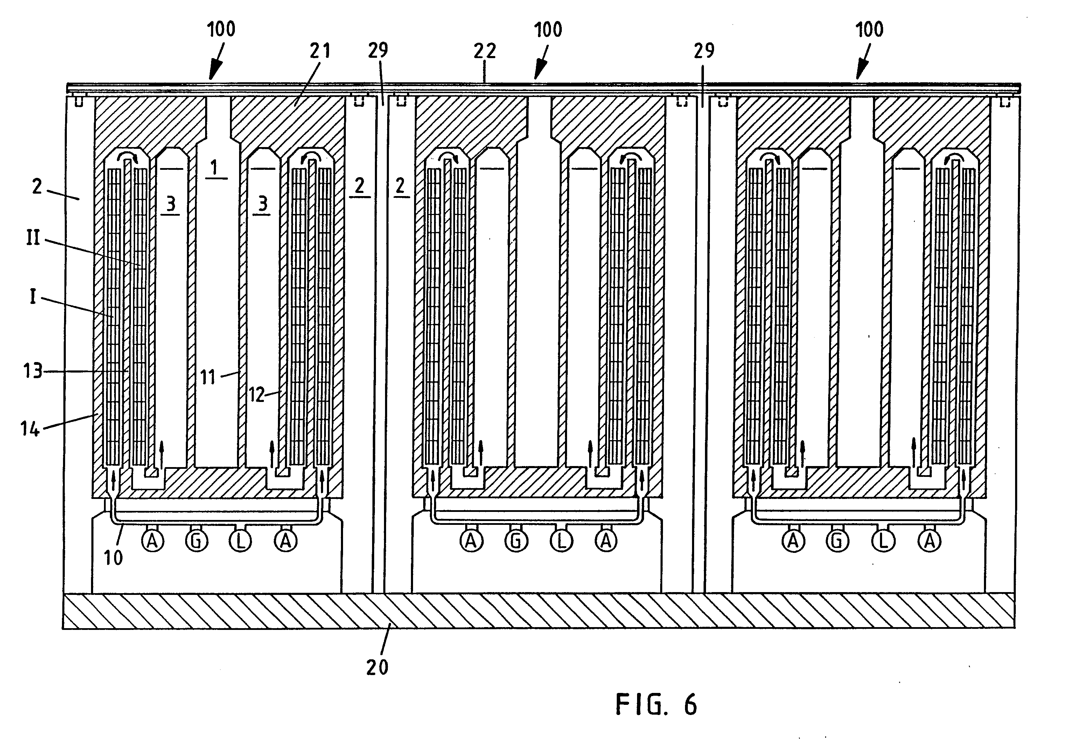

Zwischen den starren Seitenwänden 2 sind somit alle zur Beheizung einer Reaktorkammer 1 gehörigen Elemente angeordnet, so daß jede einzelne Reaktorkammer 1 unabhängig von der benachbarten betrieben werden kann, wenn mehrere Großraumverkokungsreaktoren 100 zu einem Reaktorblock (Fig. 6, 7, 8) zusammengefaßt sind. In der Figur 1 ist die Strömungsrichtung von Luft L bzw. Schwachgas G über die Zuführungskanäle 10 durch die Regeneratoren I und II und über eine Umkehrstelle 15 zum unteren Ende eines aufbrennenden Heizzuges 4b (Fig. 2) dargestellt. Der in Fig. 1 nicht gezeichnete Abzug der Abhitze A aus einem abziehenden Heizzug 4a (Fig. 2) erfolgt in umgekehrter Richtung über die Umkehrstelle 15 und die Regeneratoren I und II zu den Abführungskanälen 10 für Abhitze A.

In der Figur 2 ist die linke Hälfte des Großraumverkokungsreaktors 100 der Figur 1 im waagerechten Teilschnitt auszugsweise dargestellt, wobei insbesondere die Querverbindungen von der Läuferwand 11 über eine Hohlbinderwand 5 oder eine Vollbinderwand 6, die Trennwand 12, eine Querwand 7 und die Wand 14 mit Isolierschicht bis zur starren Seitenwand 2 ersichtlich sind.

Weiterhin sind in der Figur 2 in den Hohlbinderwänden 5 die Kanäle A, L und in den Heizzügen 4a, 4b, die Austrittsöffnungen A, L, G für die höhengestufte Zuführung von Luft L bzw. Schwachgas G und die Abführung der Abhitze A dargestellt. Mit Pfeilen 8 ist dabei die Umkehrung der Strömungsrichtung in Kammerlängsrichtung von den aufbrennenden Heizzügen 4b zu den abziehenden Heizzügen 4a angedeutet. Die Umkehrung der Strömungsrichtung an der oberen Umkehrstelle (Fig. 1) vom auf-zum abziehenden Regenerator (R), die durch die Längswand 13 getrennt sind, ist durch Pfeile 9 verdeutlicht.

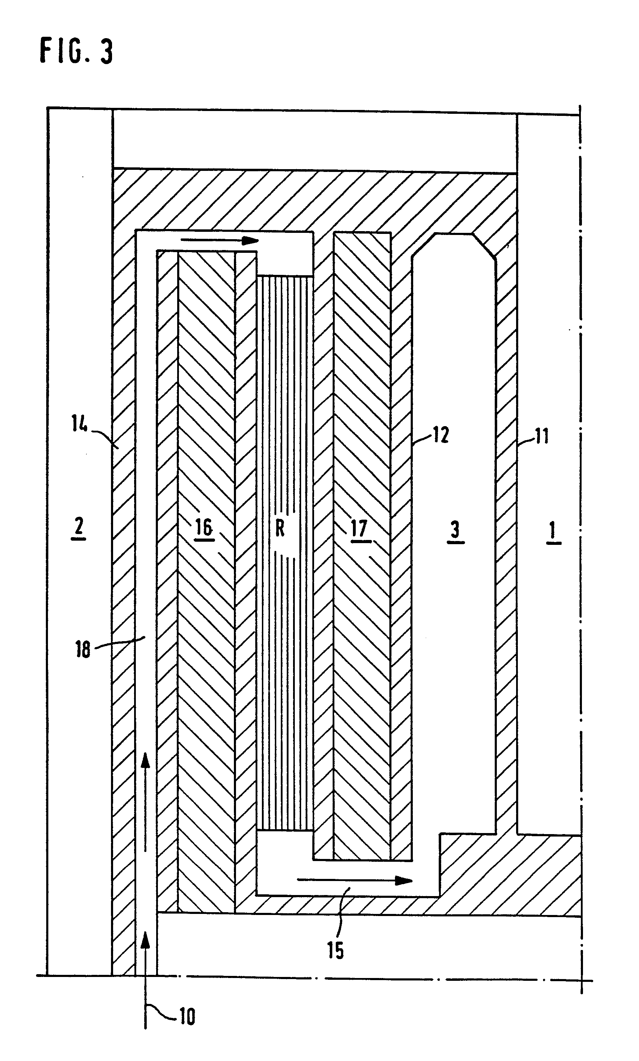

In der Figur 3 ist eine Ausführungsform mit einem einzügigen Regenerator (R) bzw. Rekuperator dargestellt, wobei die Verbrennungsmedien über einen zwischen der starren Seitenwand 2 und einer Wand mit Isolierschicht 16 angeordneten senkrechten Kanal 18, den einzügigen Regenerator (R) und die Umkehrstelle 15 zu-und abgeführt werden. Die Wände mit Isolierschichten 16 und 17 können über der Höhe der Reaktorkammer 1 aus Material unterschiedlicher Wärmeleitfähigkeit ausgeführt sein.

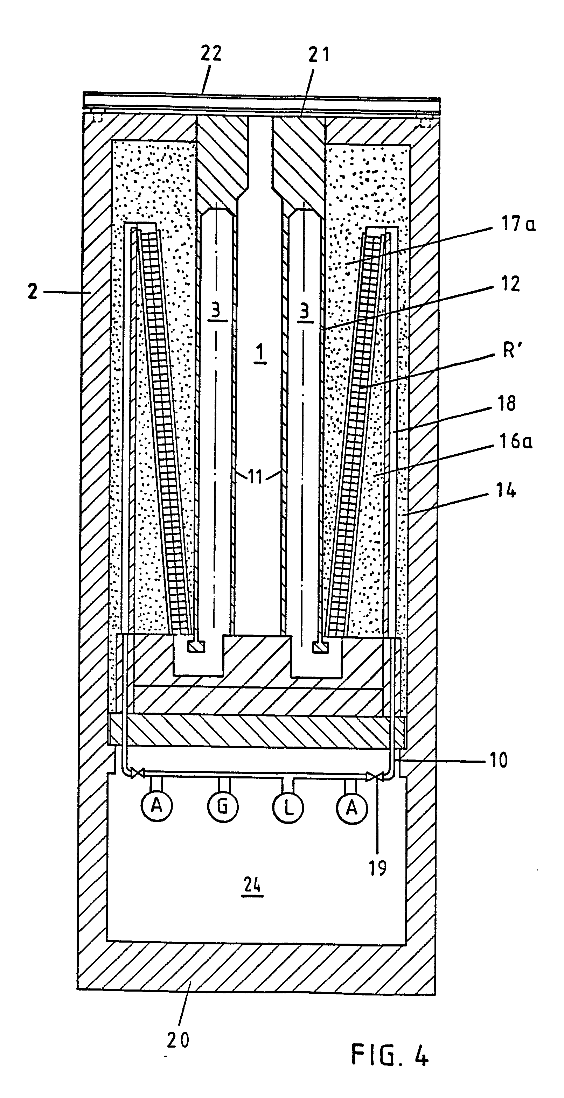

In der Figur 4 ist eine Ausgestaltung dargestellt, bei der im heißen, d. h. im unteren Bereich des Regenerators (R') die Isolierschicht 16a dicker ausgebildet ist als die Isolierschicht 17a, während es im oberen Bereich des Regenerators (R') gerade umgekehrt ist. Das führt zu der dargestellten Schrägstellung des Regenerators (R'). Bei dieser Ausgestaltung sind außerdem die zwischen den Seitenwänden 2 angeordneten Elemente so ausgeführt, daß sie einzeln ausgetauscht werden können.

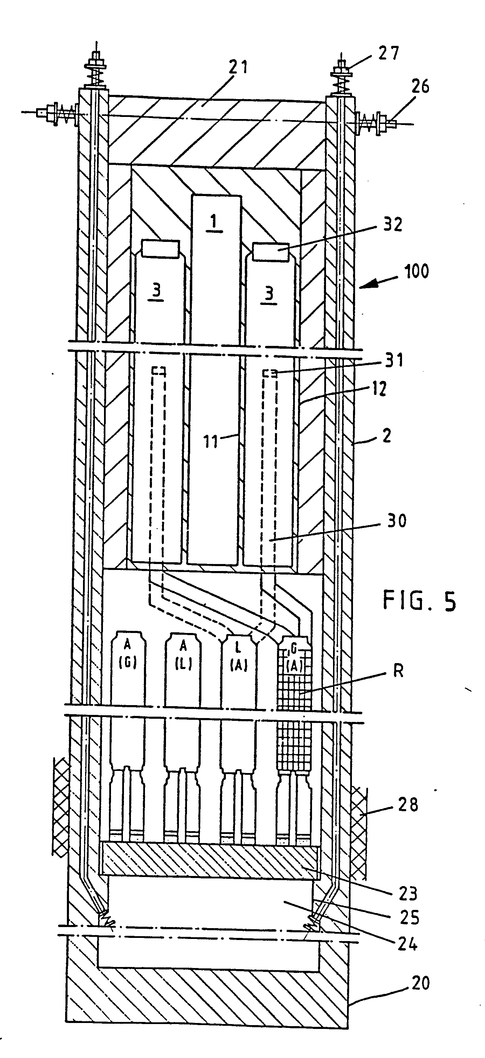

In der Figur 5 ist ein Großraumverkokungsreaktor 100 (Modul) mit unterhalb der Reaktorkammer 1 liegendem Regenerator R abgebildet. Die starren Seitenwände 2 sind bei dieser Ausgestaltung über horizontal in der Reaktordecke 21 angeordnete federbelastete Längsanker 26 und über eine Grundplatte 20 miteinander verbunden. Durch diese Konstruktion behalten die starren Seitenwände 2 auch beim Ausbau von einzelnen Elementen ihren vorgegebenen Abstand. Die starren Seitenwände 2 sind weiterhin in senkrechter Richtung mit gekühlten Spannankern 27 versehen.

Der unten liegende Regenerator (R) stützt sich auf eine oder mehrere Zwischenplatten 23 oberhalb eines Kellers 24 ab, welche ihrerseits auf Vorsprüngen 25 der Seitenwände 2 aufliegen.

Bei dem hier dargestellten Großraumverkokungsreaktor 100 können Heizwände 3, Regenerator (R) und der Reaktordecke 21, ausge nommen die Zwischenplatte 23, einen durchgehenden gemauerten Aufbau aufweisen. Einzelteile, beispielsweise Deckenelemente, Wandelemente oder Regenerator (R) können aber auch ganz oder teilweise aus vorgefertigten Feuerfestbetonteilen bestehen, die weitgehend selbständig austauschbar sind, um Reparaturarbeiten zu vereinfachen und zu beschleunigen. Die die Reaktorkammer 1 begrenzenden Flächen der Heizwände 3 verlaufen in Kammerlängsrichtung parallel zueinander.

Zur Vermeidung von zu großen Temperaturunterschieden in den starren Seitenwänden 2 kann außen eine Isolierschicht 28 angebracht sein. Die Verbrennungsmedien werden von den Regeneratoren R über Hohlbinderkanäle 30 und höhengestufte Austrittsschlitze, von denen nur der obere Austrittsschlitz 31 dargestellt ist, der Heizwand 3 zugeführt. Die Verbrennungsabgase werden über eine obere Umkehrstelle 32 und dann in umgekehrter Richtung durch die Heizzüge und die Hohlbinderkanäle 30 zu den Regeneratoren (R) abgeführt.

In der Figur 6 sind beispielhaft drei einzelne zu Modulen ausgebildete Großraumverkokungsreaktoren 100, wie sie in der Figur 1 dargestellt sind, zu einem Reaktorblock zusammengefaßt. Zwischen zwei benachbarten starren Seitenwänden 2 befindet sich jeweils ein Kühlspalt 29. Da die Großraumverkokungsreaktoren 100 unabhängig voneinander betreibbar sind, können in einem Reaktorblock beliebig viele Reaktoren zusammengefaßt werden.

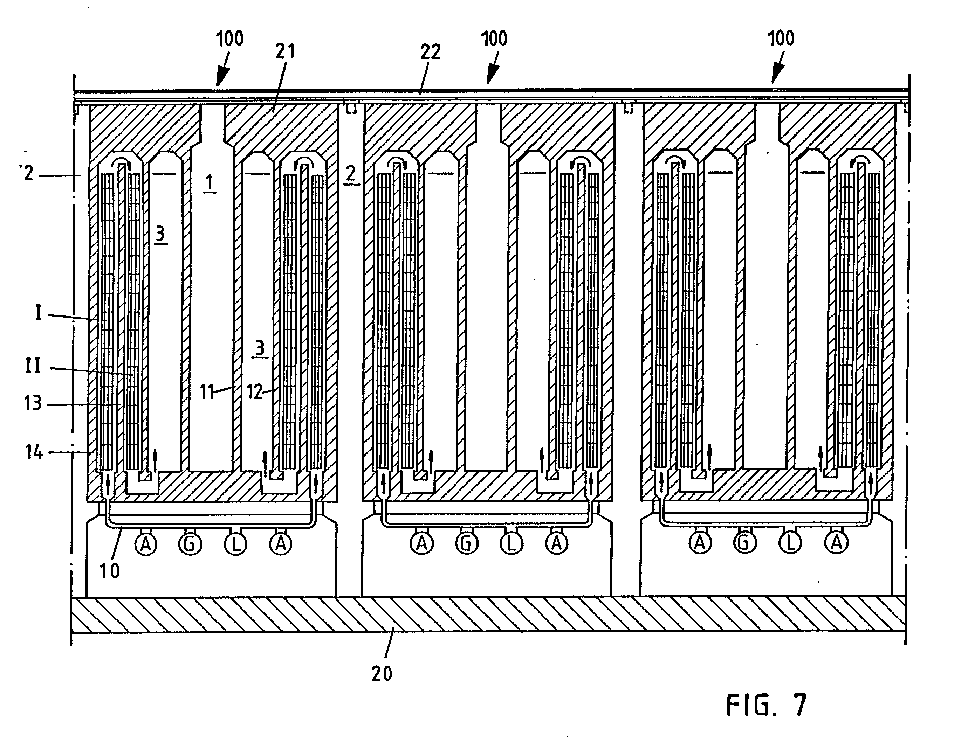

In der Figur 7 ist eine Reaktorblockausgestaltung abgebildet, bei der jeder Modul als Teilmodul einzeln zwischen zwei starren Seitenwänden 2 angeordnet ist, wobei benachbarte Teilmodule jeweils eine gemeinsame starre Seitenwand 2 haben.

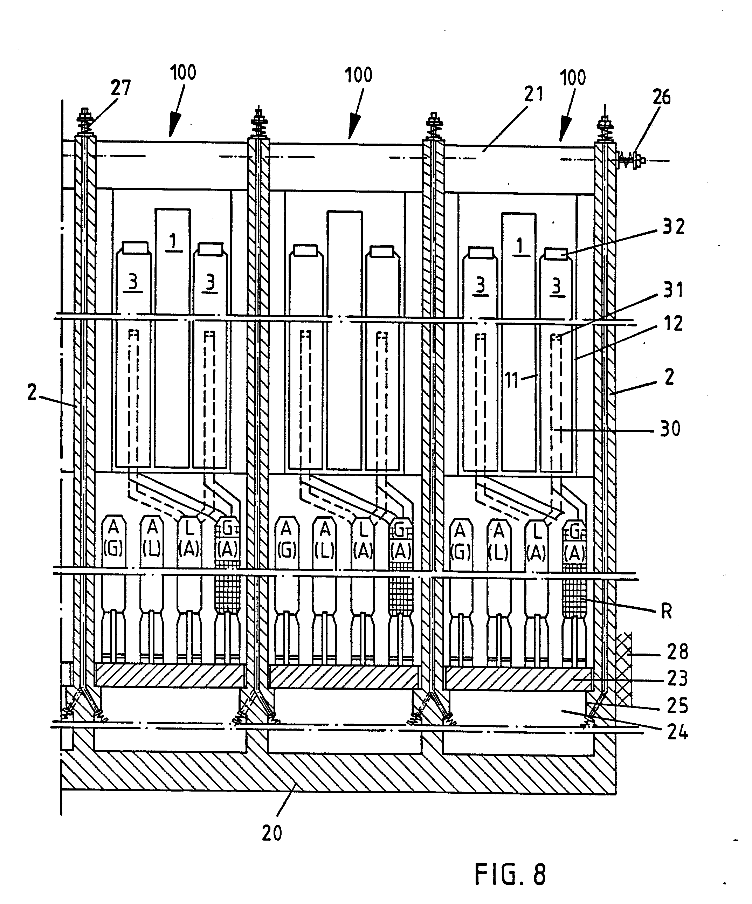

In der Figur 8 sind mehrere Großraumverkokungsreaktoren mit unter den Heizwänden 3 und der Reaktorkammer 1 angeordneten Regeneratoren (R) (entsprechend Fig. 5) zu einem Reaktorblock zusammengefaßt.

Wie in der Figur 7, ist zwischen zwei benachbarten Teilmodulen nur jeweils eine gemeinsame starre Seitenwand 2 vorgesehen, die in senkrechter Richtung mit gekühlten Spannankern 27 versehen ist. Die äußere starre Seitenwand 2 am Ende des Reaktorblockes weist eine Isolierschicht 28 auf.

**BEZUGSZEICHENLISTE**

100 Großraumverkokungsreaktor
1 Reaktorkammer
2 starre Seitenwand
3 Heizwände
4a Heizzug (abziehend)
4b Heizzug (aufbrennend)
5 Hohlbinderwand
6 Vollbinderwand
7 Querwand
8 Strömungsrichtungspfeil zwischen 4a und 4b
9 Strömungsrichtungspfeil zwischen I und II
10 Zu-und Abführungskanäle für A, L, G
11 Läuferwand
12 Trennwand
13 Längswand
14 Wand mit Isolierschicht
15 Umkehrstelle
16,16a Wand mit Isolierschicht
17,17a Wand mit Isolierschicht
18 senkrechter Kanal
19 Ventile
20 Grundplatte
21 Reaktordecke
22 Abstandselemente
23 Zwischenplatte
24 Keller
25 Vorsprünge
26 federbelastete Längsanker
27 gekühlte Spannanker
28 Isolierschicht
29 Kühlspalt
30 Hohlbinderkanäle

31 oberer Austrittsschlitz
32 obere Umkehrstelle
33 Reaktorboden
34 Abstandselement
35 Reaktorkeller
I Regenerator nahe 2
II Regenerator nahe 3
R, R' Regenerator oder Rekuperator
L Luft
G Schwachgas
A Abhitze

## Ansprüche

1. Verkokungssystem, bei dem Einsatzmischungen, insbesondere auf Basis von Steinkohle, chargenweise einem Reaktor aufgegeben werden, der indirekt mit Wärmerückgewinnung in Regeneratoren oder Rekuperatoren beheizt wird, dadurch gekennzeichnet, daß

a) der Reaktor als Großraumverkokungsreaktor (100) ausgebildet ist;

b) mehrere Großraumverkokungsreaktoren (100) zu einem Reaktorblock zusammengefaßt sind;

c) die Großraumverkokungsreaktoren (100) zu voneinander unabhängigen Modulen ausgebildet sind, wobei jeder Modul unabhängig von seinen Nachbarmodulen völlig ohne oder ohne wesentliche Beeinträchtigung der Betriebsmöglichkeiten der Nachbarmodule betreibbar und gegebenenfalls auswechselbar ist.

2. Reaktorblock nach Anspruch 1, dadurch gekennzeichnet, daß jeder Modul als Teilmodul einzeln zwischen zwei starren, die konstruktions-und betriebsbedingten Kräfte aufnehmenden Seitenwänden (2) angeordnet ist (Figur 7).

3. Reaktorblock nach Anspruch 2, dadurch gekennzeichnet, daß jeder Teilmodul jeweils unabhängig von seinen Nachbarteilmodulen völlig ohne oder ohne wesentliche Beeinträchtigung der Betriebsmöglichkeiten der Nachbarteilmodule betreibbar und gegebenenfalls auswechselbar ist.

4. Reaktorblock nach Anspruch 2 oder 3, dadurch gekennzeichnet, daß die einem Teilmodul benachbarten Seitenwände (2) unabhängig von der Reaktordecke (21) in vorgegebenem Abstand verbindbar sind.

5. Reaktorblock nach einem oder mehreren der Ansprüche 1 bis 4, dadurch gekennzeichnet, daß die Seitenwände (2) an vorzugsweise auf der Reaktordecke (21) in Blocklängsrichtung angeordneten Abstandselementen (22) und/oder Längsankern (26) festlegbar sind.

6. Reaktorblock nach einem oder mehreren der Ansprüche 1 bis 5, dadurch gekennzeichnet, daß die aneinander grenzenden Heizwände (3) benachbarter Module Teilmodule beheizungstechnisch unabhängig voneinander ausgebildet sind.

7. Reaktorblock nach einem oder mehreren der Ansprüche 1 bis 6, dadurch gekennzeichnet, daß der Wärmerückgewinnungsteil (R, R') eines Moduls/Teilmoduls unabhängig von den übrigen Teilen des Moduls/Teilmoduls ohne Beeinträchtigung der Betriebsmöglichkeiten der übrigen Module/Teilmodule austauschbar ist.

8. Reaktorblock nach einem oder mehreren der Ansprüche 1 bis 7, dadurch gekennzeichnet, daß der Wärmerückgewinnungsteil (R, R') eines Moduls/Teilmoduls beiderseits außen neben den Heizwänden (3) angeordnet ist.

9. Reaktorblock nach einem oder mehreren der Ansprüche 1 bis 7, dadurch gekennzeichnet, daß der Wärmerückgewinnungsteil (R, R') eines Moduls/Teilmoduls in Form von Regeneratoren oder Rekuperatoren unter den Heizwänden (3) und/oder den Reaktorkammern (1) angeordnet ist.

10. Reaktorblock nach einem oder mehreren der Ansprüche 1 bis 9, dadurch gekennzeichnet, daß jede der beiden Heizwände (3) einer Reaktorkammer (1) eines Moduls/Teilmoduls mit eigenen, getrennt beaufschlagbaren Regeneratoren (R) für Luft, Schwachgas und Abhitze versehen ist.

11. Reaktorblock nach einem oder mehreren der Ansprüche 1 bis 10, dadurch gekennzeichnet, daß die Module/Teilmodule und/oder einzelne Teile der Module/Teilmodule und/oder die Seitenwände (2) und/oder Teile der Seitenwände aus vorgefertigten Teilen, gegebenenfalls aus Feuerfestbeton, bestehen.

0 275 513

FIG. 1

FIG. 2

0 275 513

# FIG. 3

FIG. 4

0 275 513

FIG. 5

FIG. 6

FIG. 7

FIG. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-C- 406 734 (KOPPERS) <br> * Anspruch; Seite 1, Zeilen 1-9,35-46; Seite 2, Zeilen 17-25; Figuren 1,2 * | 1,2,5,8 -11 | C 10 B 5/02 <br> C 10 B 5/10 |
| A | | 3,4,6,7 | |
| Y | DE-B-2 359 667 (CARL STILL) <br> * Anspruch 1; Spalte 4, Zeilen 50,51; Figuren 1,8 * | 1,2,5,8 -11 | |
| A | | 3,4,6,7 | |
| A | DE-C- 243 415 (STETTINER CHAMOTTE-FABRIK) <br> * Anspruch 1; Figuren 1,2 * | 1 | |
| A | DE-C- 261 360 (MOSS) <br> * Anspruch 1; Figuren 1-5 * | 8 | |

RECHERCHIERTE SACHGEBIETE (Int. Cl.4)

C 10 B

Der vorliegende Recherchenbericht wurde für alle Patentansprüche erstellt

| Recherchenort | Abschlußdatum der Recherche | Prüfer |
|---|---|---|
| DEN HAAG | 25-03-1988 | MEERTENS J. |

EPO FORM 1503 03.82 (P0403)